Europäisches Patentamt

European Patent Office

Office européen des brevets

(11) Numéro de publication: **0 436 451 A1**

# (12) DEMANDE DE BREVET EUROPEEN

(21) Numéro de dépôt: 90420569.7

(22) Date de dépôt: 24.12.90

(51) Int. Cl.5: **B65G 27/34**, B65G 27/02, B65G 47/51, B65G 47/14

(30) Priorité: 05.01.90 FR 9000143
15.03.90 FR 9003453

(43) Date de publication de la demande:
10.07.91 Bulletin 91/28

(84) Etats contractants désignés:
CH DE ES GB IT LI

(71) Demandeur: MERLIN GERIN
2, chemin des Sources
F-38240 Meylan(FR)

(72) Inventeur: Bredel, Patrick
Merlin Gerin, Sce. Brevets
F-38050 Grenoble Cedex(FR)
Inventeur: Guillet, Jean
Merlin Gerin, Sce. Brevets
F-38050 Grenoble Cedex(FR)
Inventeur: Terracol, Claude
Merlin Gerin, Sce. Brevets
F-38050 Grenoble Cedex(FR)

(74) Mandataire: Kern, Paul et al
Merlin Gerin Sce. Brevets
F-38050 Grenoble Cédex(FR)

(54) Dispositif d'alimentation par bol vibrant a stock-tampon.

(57) L'alimentation en pièces d'une machine est réalisée par un bol vibrant (21) de triage des pièces défectueuses et suivi d'un stock tampon constitué par une rampe hélicoïdale (28) vibrante. La rampe (28) peut appartenir à un deuxième bol (22) ou être disposée sur une jupe externe du bol vibrant.

FIG. 2

# DISPOSITIF D'ALIMENTATION PAR BOL VIBRANT A STOCK-TAMPON

L'invention est relative à un dispositif d'alimentation selon le préambule de la revendication 1.

Dans les installations d'assemblage automatique, l'alimentation des pièces à insérer est le plus fréquemment réalisée à partir d'un bol vibrant dans lequel les pièces sont déversées en vrac, soit manuellement, soit à partir d'une trémie de stockage.

Le bol vibrant, selon une technologie connue en soi (document CH-A-373.938), est monté sur un support générant des vibrations qui impriment aux pièces un mouvement de rotation autour de l'axe vertical du système. Ce mouvement conduit les pièces à s'engager sur une rampe hélicoïdale placée sur la paroi latérale du bol, et à s'élever progressivement jusqu'au sommet de cette paroi. Au cours de cette progression, les pièces, initialement présentées dans une position aléatoire, rencontrent des obstacles dont la fonction est, soit de corriger cette position, soit de faire retomber au fond du bol les pièces dont la position ne peut être corrigée, ou qui présentent une importante anomalie de forme.

En fin de compte, et si tout s'est normalement déroulé, les pièces qui se présentent au sommet de la rampe hélicoïdale sont toutes correctement orientées. Elles peuvent alors s'engager sur un couloir d'alimentation qui peut être, selon les cas, un rail vibrant, un convoyeur à courroie, un dispositif pneumatique, ou tout autre système approprié. Le couloir alimente en général un manipulateur d'insertion qui assure le transfert des pièces sur le produit auquel elles doivent être incorporées.

Pour que le dispositif d'alimentation ne ralentisse pas la machine d'assemblage, il faut que les débits naturels du bol et du couloir soient supérieurs à celui de la machine. Il est alors recommandé de placer sur le couloir des capteurs d'accumulation dont l'un, placé le plus en amont possible, met le bol à l'arrêt quand le couloir est pratiquement plein, et le second, placé plus en aval, commande le redémarrage du bol.

Le principal reproche qui est à faire à un tel dispositif est la fréquence des aléas auxquels il est sujet. Ces aléas proviennent rarement du dispositif lui-même, s'il a été correctement mis au point, mais plutôt du contenu du bol, dans lequel on peut rencontrer des pièces de géométrie imparfaite (déformations, bavures etc...) et des corps étrangers.

Dans un certain nombre de cas, ces éléments défectueux vont provoquer des coincements en certains points particuliers, sur la rampe hélicoïdale ou plus fréquemment à l'entrée du couloir qui est généralement configurée pour éviter l'admission de ces éléments défectueux. Ceux-ci doivent alors être éliminés par intervention manuelle.

La qualité des pièces pouvant difficilement être irréprochable dans un approvisionnement en vrac, ces situations de coincement sont fréquentes, et se traduisent par des arrêts-machine, dans la mesure où la longueur du couloir d'alimentation peut difficilement être suffisante pour en faire un stock-tampon valable.

L'objet de la présente invention est de remédier dans une large mesure à cet inconvénient en réalisant un stock tampon à la sortie du bol vibrant par les moyens précisés dans la caractéristique de la revendication 1.

Selon un premier mode de mise en oeuvre, on utilise un dispositif à deux niveaux, se présentant sous la forme de deux bols ou cuvettes superposés. Dans le flux des pièces, ces deux cuvettes travaillent en série, à savoir :

- la cuvette supérieure ou amont reçoit l'alimentation en pièces (manuellement ou par trémie),
- les pièces délivrées par la cuvette supérieure sont envoyées dans la cuvette inférieure ou aval, après passage par un orifice calibré,
- la cuvette inférieure alimente enfin le couloir d'alimentation de la machine.

Les deux cuvettes étant munies de rampes hélicoïdales identiques, la première joue un rôle de premier tri, ou déverminage, c'est-à-dire que s'il doit y avoir un coincement dû à une pièce défectueuse ou à un corps étranger, ce coincement se produira à la sortie de cette première cuvette. L'interruption qui s'ensuivera aura peu de risques de se répercuter jusqu'à la machine, dans la mesure où celle-ci continuera à être alimentée par la deuxième cuvette, dont le contenu joue le rôle d'un stock tampon. Quant aux perturbations pouvant survenir à la sortie de la deuxième cuvette, elles seront évidemment beaucoup moins fréquentes, dans la mesure où les éléments défectueux ayant occasionné des coincements à la sortie de la première cuvette auront été éliminés, et ne viendront donc pas polluer le contenu de la deuxième. Celle-ci aura donc un débit naturel supérieur à la première.

Selon un autre mode de mise en oeuvre, le bol vibrant est muni d'une jupe cylindrique ou tronconique coaxiale avec sa partie principale, et située à l'extérieur de celle-ci. Sur cette jupe est placée une rampe hélicoïdale descendante alimentée à partir de la partie principale du bol, et alimentant un couloir, généralement rectiligne, conduisant les pièces à l'entrée de la machine. Ce couloir sera toujours désigné ci-après "couloir d'alimentation", la rampe hélicoïdale fixée sur la jupe étant désignée "zone tampon".

La zone tampon forme avec la partie principale du bol un ensemble homogène et rigide, supporté et actionné par un même support générateur de vibrations. Le couloir d'alimentation reste mécaniquement distinct de cet ensemble, et actionné par un dispositif propre.

Au cours de leur progression, les pièces, initialement déversées en vrac dans la partie principale du bol, montent le long de la rampe hélicoïdale équipant cette partie, et, après avoir franchi un passage calibré, s'engagent dans la rampe descendante constituant la zone tampon, puis dans le couloir d'alimentation. En première analyse, on peut considérer qu'on a allongé le couloir d'alimentation d'une longueur égale à la longueur développée de la zone tampon. On fait ainsi apparaitre une capacité de stockage relativement importante entre le passage calibré marquant la sortie de la partie principale du bol, et l'entrée de la machine. Si on considère qu'une grande partie des aléas de distribution surviennent dans la partie principale, il est clair que cette capacité de stockage tampon pourra être employée pour limiter les répercussions de ces aléas sur le fonctionnement de la machine.

La régulation du système peut être effectuée par des capteurs de type classique, à savoir des détecteurs d'accumulation placés sur le couloir d'alimentation et des palpeurs installés sur les deux cuvettes et mesurant le niveau de remplissage de chacune d'elles.

Un perfectionnement complémentaire de l'invention peut conduire à améliorer sensiblement le débit de l'ensemble du dispositif de distribution. Un accroissement de performance dans ce domaine peut présenter un intérêt certain, dans la mesure où on tend à réaliser des machines à cadence de plus en plus élevée, et où la distribution peut se présenter alors comme un goulot d'étranglement. Le perfectionnement envisageable porte sur certains cas de pièces à distribuer comportant un élément d'asymétrie. Fréquemment, des pièces de ce type font l'objet d'une première orientation ne tenant pas compte de l'élément d'asymétrie, ce qui les conduit à se présenter aléatoirement dans deux positions possibles a et b. Si la position a est la seule valable, il faut alors déceler les pièces qui sont dans la position b, et les faire retomber dans la cuvette, par exemple au moyen d'un déflecteur de forme appropriée. Le débit résultant de ce dernier tri est évidemment inférieur de moitié à celui qu'on aurait si on ne faisait pas ce tri (si on admet que les positions a et b sont équiprobables). Sur une installation comportant deux niveaux, on peut envisager de ne pas faire le tri entre a et b sur la cuvette du niveau amont, ce qui donne à cette cuvette un débit naturel beaucoup plus élevé. Etant

.donné que le goulot d'étranglement du dispositif se serait normalement situé à ce niveau, la performance de l'ensemble se trouve donc relevée à la hauteur de celle de la cuvette du niveau aval, qui doit bien entendu conserver le tri entre a et b, mais qui bénéficie de la dépollution introduite par la cuvette amont.

Un autre perfectionnement de l'invention consiste à utiliser la sortie de la première cuvette pour y placer un dispositif de contrôle et d'élimination des pièces qui présentent un défaut n'entraînant pas de situation de coincement (une partie manquante par exemple). Ces défauts sont en fait les plus graves, car, n'étant pas décelés, ils conduisent à envoyer sur la machine d assemblage des pièces qui devraient normalement être éliminées. Un détecteur approprié peut donc être placé à la sortie de la première cuvette et, en cas de pièce défectueuse, entraîner l'actionnement d'un dispositif d'aiguillage mécanique permettant d'envoyer cette pièce au rebut, au lieu de l'admettre dans la deuxième cuvette. Le détecteur peut être de tout principe connu en soi, depuis un simple palpeur jusqu'à un dispositif de contrôle par vision artificielle, comportant une caméra et un système informatique de traitement d'image.

Un aspect important d'un tel dispositif est celui de la régulation. Son débit naturel étant normalement supérieur à celui de la machine (pour éviter qu'il constitue un goulot d'étranglement) il faut, plutôt que de laisser vibrer en permanence, le mettre à l'arrêt pendant certaines périodes. L'arrêt et le redémarrage de la vibration se font en fonction des niveaux de remplissage du couloir d'alimentation et de la zone tampon, ces niveaux étant détectés par des capteurs appropriés.

D'autres avantages et caractéristiques ressortiront plus clairement de la description qui va suivre d'un mode de réalisation de l'invention donné à titre d'exemple non limitatif, et représenté aux dessins annexés dans lesquels:

- la figure 1 est une vue schématique en élévation-coupe d'un dispositif à deux bols vibrants distincts selon l'invention;
- la figure 2 est une vue analogue à celle de la figure 1, illustrant une variante de réalisation;
- les figures 3a et 3b, sont des vues de détail;
- la figure 4 illustre une variante de réalisation, équipée d'un dispositif de contrôle de pièces;
- les figures 5 et 6 sont des vues respectivement en coupe et en perspective d'une variante de réalisation.

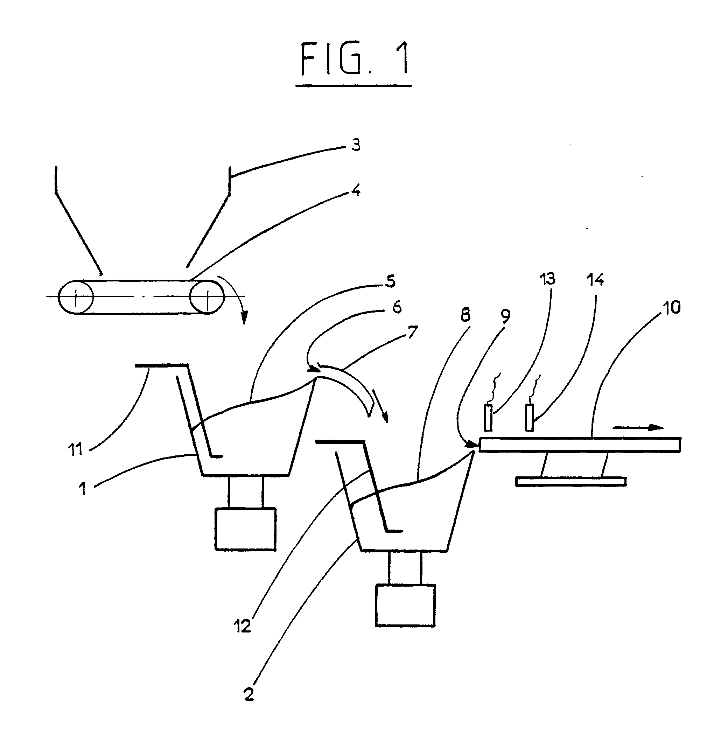

Sur la figure 1 le bol supérieur 1 est alimenté par la trémie 3 dont le fond est constitué par un tapis roulant 4.

Les pièces issues du bol supérieur 1 après être montées le long de la rampe hélicoïdale 5, et être passées à travers l'orifice calibré 6, sont acheminées dans le bol 2 par la goulotte 7. Le bol 2 reproduit le processus du bol 1, à savoir acheminement des pièces le long de la rampe hélicoïdale 8 et passage à travers l' orifice calibré 9. Les pièces débouchent alors dans le couloir d'alimentation 10, représenté ici sous la forme d'un rail vibrant, qui les amène jusqu'au manipulateur d'insertion (non représenté).

Le capteur 11 régule le niveau de remplissage du bol supérieur 1 en pilotant l'actionnement du tapis roulant 4 qui alimente ce bol.

Le capteur 12 joue le même rôle pour le bol inférieur 2 en pilotant la vibration du bol 1.

Enfin, les capteurs 13 et 14 placés sur le couloir 10 régulent le contenu de celui-ci en pilotant la vibration du bol inférieur 2 (arrêt quand l'accumulation atteint le capteur 13, redémarrage quand elle revient au niveau du capteur 14). Le bol inférieur 2 constitue un stock tampon.

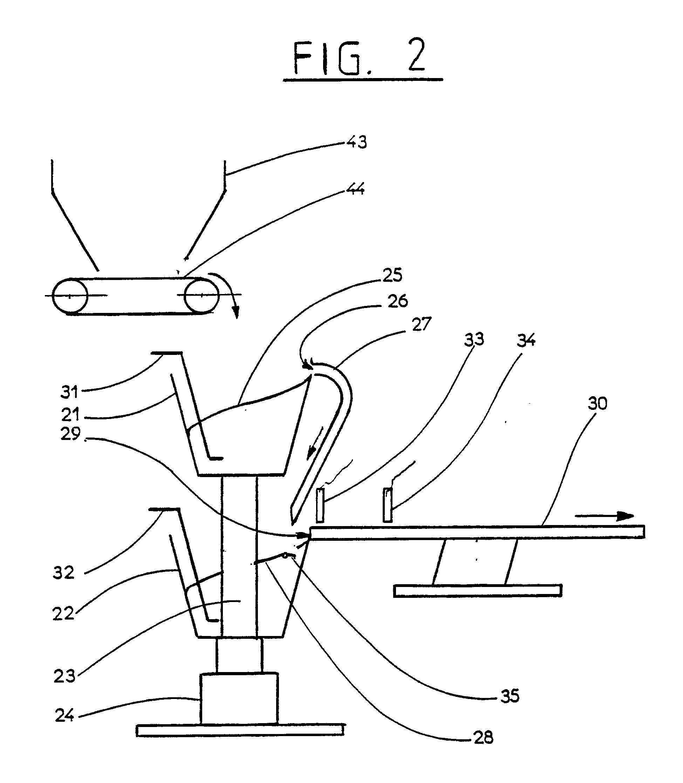

La figure 2 illustre une variante de réalisation constituée par un dispositif à deux bols ou cuvettes coaxiales 21, 22 reliées entre elles par une entretoise rigide 23, et supportées et actionnées par le même support-générateur de vibration 24.

On retrouve dans ce dispositif les mêmes organes d'alimentation que dans le précédent, à savoir la trémie 43 et le tapis 44. On retrouve également:

- la rampe hélicoïdale 25 équipant la cuvette 21, et débouchant sur l'orifice calibré 26 et la goulotte 27,
- la rampe hélicoïdale 28 équipant la cuvette 22, et débouchant sur l'orifice calibré 29 et le couloir 30,
- les capteurs 31 et 32 régulant respectivement le niveau de remplissage des cuvettes 21 et 22,
- les capteurs 33 et 34 placés sur le couloir 30 et régulant son contenu.

Dans ce dispositif apparaît un problème particulier dû au fait que les deux cuvettes vibrent systématiquement ensemble. Or, du fait du déverminage effectué par la cuvette 21 et des interruptions qu'il occasionne dans le flux des pièces à travers l'orifice 26, le débit naturel de la cuvette 21 est inférieur à celui de la cuvette 22, qui bénéficie, elle, de pièces dépolluées. Comme le débit réel des deux cuvettes est forcément identique, il s'ensuit qu'on doit accepter un certain taux de recyclage à l'intérieur de la cuvette 22, c'est-à-dire un certain pourcentage de pièces qui, ayant progressé normalement le long de la rampe hélicoïdale 28, sont rejetées au fond de la cuvette 22.

Il faut donc organiser ce recyclage, en fonction des signaux envoyés par les capteurs 32 d'une part, 33 et 34 d'autre part. Désignons ces signaux comme suit:

$X = $ demande d'alimentation de la cuvette 22

$Y = $ demande d'alimentation du couloir 30

$\overline{X} = $ demande de non alimentation de la cuvette 22

$\overline{Y}$ demande de non alimentation du couloir 30

Les différentes combinaisons possibles de ces signaux font apparaître quatre types de situations $= XY, X\overline{Y}, \overline{X}Y, \overline{X}\,\overline{Y}$.

Dans tous les cas, le pilotage de l'alimentation de la cuvette 21 par le tapis 44 s'effectue par le capteur 31. Il reste donc à piloter la vibration du générateur 24 de façon à satisfaire simultanément à l'alimentation de la cuvette 22 et du couloir 30. Si on désigne par V et $\overline{V}$ respectivement les états de vibration et de repos du générateur 24, on peut envisager la logique suivante:

$$XY \rightarrow V$$
$$X\overline{Y} \rightarrow V$$
$$\overline{X}Y \rightarrow V$$
$$\overline{X}\,\overline{Y} \rightarrow V$$

Ce que l'on peut exprimer en disant que l'actionnement du générateur 24 est commandé soit par le besoin d'alimentation de la cuvette 22 (capteur 32), soit par le besoin d'alimentation du couloir 30 (capteur 34), soit par les deux simultanément. Le recyclage des pièces dans la cuvette 22 apparaît à l'occasion de la situation $X\overline{Y}$. Le couloir 30 étant alors plein, les pièces ne peuvent plus s'y engager et retombent donc naturellement dans la cuvette.

Dans certains cas, ce processus peut être générateur de coincements. En effet, la situation $X\overline{Y}$ est en fait une situation de blocage. Les pièces continuant à être sollicitées par la vibration vont donner lieu à une certaine accumulation à l'amont de l'orifice 29. Selon la forme des pièces, cette accumulation peut être sans inconvénient, ou au contraire se traduire par des coincements irréversibles, par exemple à la suite de chevauchements. Il y a alors enrayage, et le couloir ne sera plus alimenté quand il recommencera à se vider, ce qui se traduira rapidement par un arrêt machine.

Un autre mode de mise en oeuvre peut permettre d'éviter cet inconvénient. Il consiste à placer sur la rampe hélicoïdale 28, à proximité de l'orifice 29, un volet mobile 35 actionnable par tout moyen approprié, par exemple un vérin pneumatique. Ce volet, en temps normal, n'introduit aucune discontinuité sur la rampe 28. Il est alors "passant" (symbole P). S'il est actionné, il agit alors en trappe d'évacuation ou en déflecteur, et renvoie les pièces qui se présentent au fond de la cuvette 22. Il est alors "non passant" (symbole $\overline{P}$).

Le volet 35 doit être inséré dans la logique de pilotage du système, qui devient la suivante:

$$XY \rightarrow V\,P$$
$$X\overline{Y} \rightarrow V\,\overline{P}$$
$$\overline{X}Y \rightarrow V\,P$$
$$\overline{X}\,\overline{Y} \rightarrow \overline{V}P$$

Contrairement au cas précédent, on voit que la situation X$\bar{\text{Y}}$n'entraîne pas d'accumulation à l'entrée du couloir 30, car, dès que cette situation est détectée, elle place le volet 35 en position $\bar{\text{P}}$. Les pièces sont alors renvoyées au fond de la cuvette 22. Seules celles qui se trouvaient éventuellement entre le volet 35 et l'orifice 29 vont aller s'accumuler à l'amont du capteur 33. C'est ce qui explique l'intérêt de placer le volet 35 le plus près possible de l'orifice 29, et aussi de laisser un petit intervalle entre l'orifice 29 et le capteur 33.

L'intérêt de ce dispositif est évidemment basé sur le fait que les risques de coincement sont plus faibles dans le couloir 30 que sur la rampe 28, ce qui est en général le cas dans la pratique.

Notons que, dans la situation $\overline{\text{XY}}$, le volet a été placé dans la position P, alors qu'il pourrait aussi bien être dans la position $\bar{\text{P}}$. L'intérêt de choisir P est de se mettre à l'avance dans la position qui sera nécessaire pour la séquence suivante. Or cette séquence ne peut être que du type $\overline{\text{X}}$Y, qui entraîne P.

Dans tout ce qui précède, on a implicitement admis que le couloir 30 est en permanence actif. En effet, le fonctionnement du couloir n'est pas lié à celui du dispositif d'alimentation situé en amont, mais plutôt à celui de la machine placée en aval. Tant que cette machine réclame de l'alimentation, il est logique que le couloir soit maintenu actif. Les situations pour lesquelles il peut être arrêté sont celles où la machine est mise à l'arrêt pour une cause étrangère au dispositif d'alimentation concerné.

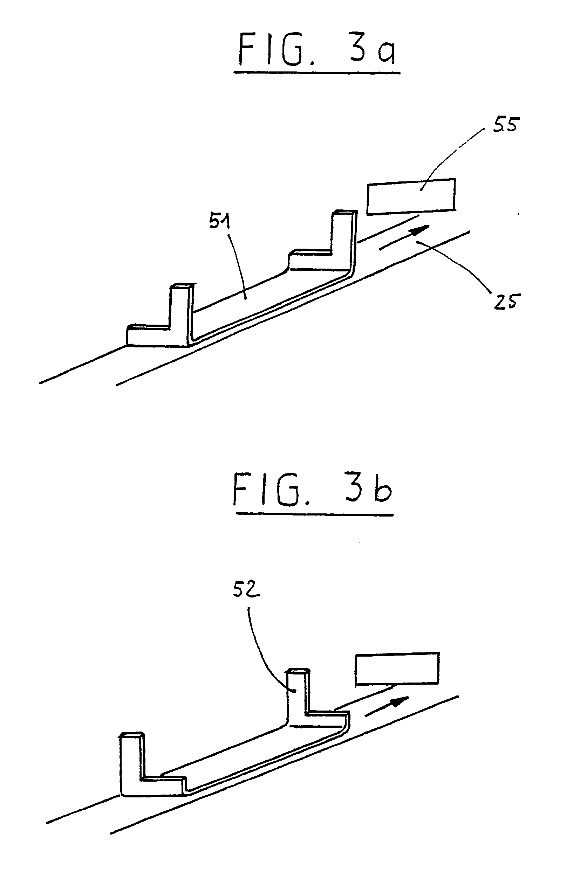

Les figures 3a et 3b représentent une pièce à distribuer présentant une asymétrie. Dans les deux cas, la pièce est supposée en cours de progression sur la rampe hélicoïdale 25. Si la position à éliminer est la position b, il est très facile de le faire au moyen d'un simple déflecteur 55 venant attaquer la pièce 51 au niveau des pattes pliées 52, et rejeter la pièce au fond de la cuvette.

Avec une géométrie convenable, on voit clairement que ce déflecteur sera opérant pour la position b, et inopérant pour la position a. Selon l'invention, on peut n'installer le déflecteur que sur la cuvette aval, ce qui permet de disposer d'un débit doublé au niveau de la cuvette amont. Bien entendu, cette dernière continuera à jouer son rôle de deverminage, en supportant les situations de blocage engendrées par des pièces de forme anormale ou par des corps étrangers.

Dans un tel cas, il est pratiquement certain que le débit naturel de la cuvette amont va devenir supérieur à celui de la cuvette aval. Avec un dispositif tel que celui décrit par la figure 1, cela ne pose aucun problème particulier de régulation. Il n'en est pas de même avec le dispositif de la figure 2. En effet, il faut s'attendre alors à un remplissage surabondant de la cuvette 22. La solution pour s'en prémunir consisterait alors à placer le volet 35 sur la cuvette 21 et non sur la cuvette 22, et à rendre ce volet non passant lors des situations de type $\overline{\text{X}}$Y. La vibration étant alors maintenue, le couloir 30 sera correctement alimenté, mais la cuvette 22 ne le sera pas.

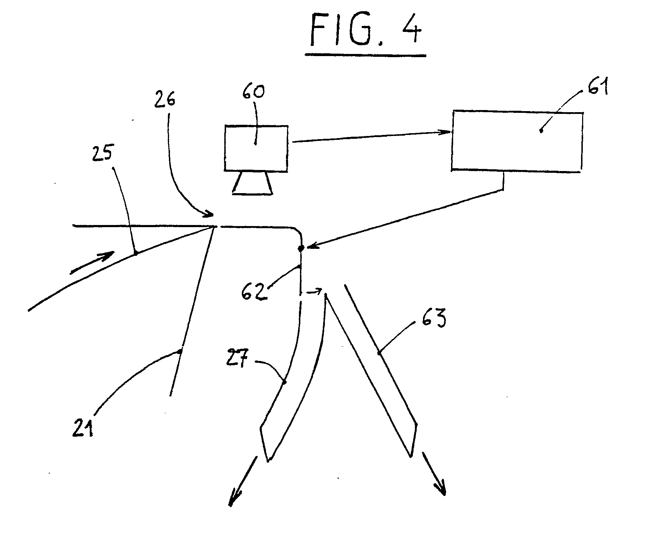

La figure 4 présente un système de contrôle intégré permettant d'éliminer des pièces qui présenteraient un défaut de géométrie ou d'aspect n'entraînant aucun coïncement, ce système étant supposé intégré au dispositif présenté sur la figure 2, à la sortie de la cuvette amont 21. Les pièces ayant normalement progressé le long de la rampe hélicoïdale 25 et étant normalement passées à travers l'orifice calibré 26, passent dans le champ d'une caméra 60 qui communique leur image à un dispositif de traitement 61. Le volet 62 se trouve normalement dans la position représentée, qui autorise les pièces à s'engager dans la goulotte 27 qui les envoie dans la cuvette aval 22. En cas d'anomalie décelée par le dispositif 61, celui-ci émet un ordre qui entraîne un changement de position du volet 62. La pièce défectueuse s'engage alors dans la goulotte 63 qui les envoie dans un bac de récupération des rebuts. Un tel système de contrôle pourrait s'envisager également à la sortie de la cuvette aval 22, ou même sur un dispositif classique à une seule cuvette. Mais il faudrait alors que le volet 62 intervienne au niveau du couloir d'alimentation 30, ce qui est toujours plus délicat surtout s'il s'agit d'un rail vibrant. Par contre, à la sortie de la cuvette amont 21, les pièces sont de toute façon destinées à tomber dans la goulotte 27, et il est facile d'orienter leur chute dans une direction différente.

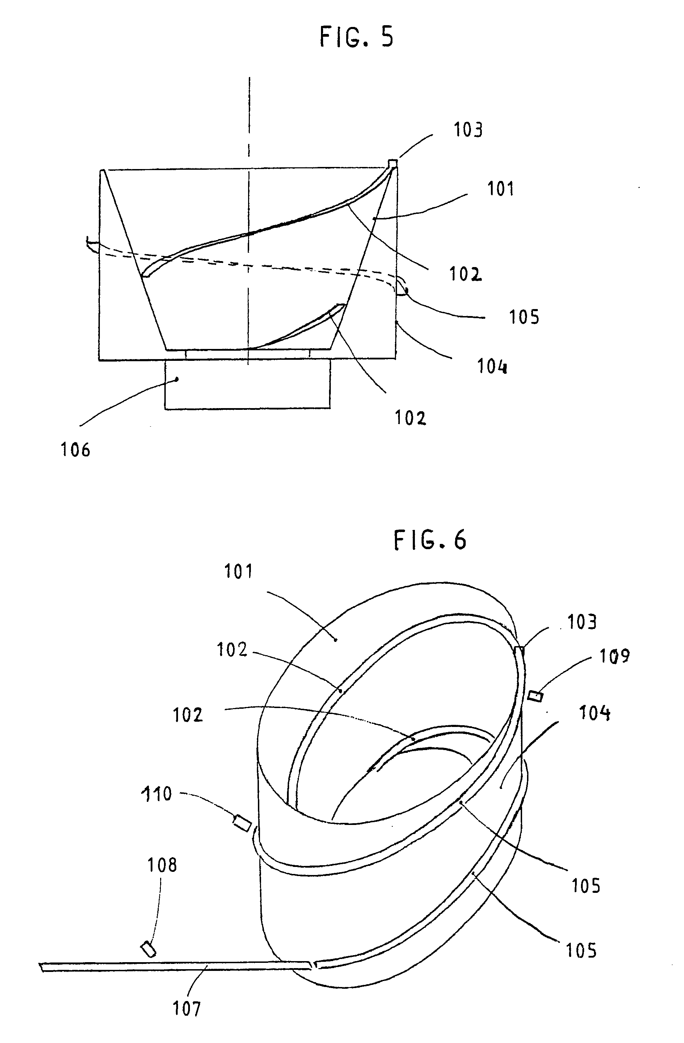

Sur les figures 5 et 6, qui illustrent une variante de réalisation, on voit:

- la cuvette principale 101, dans laquelle sont introduites des pièces à distribuer;
- la rampe hélicoïdale montante 102, le long de laquelle ces pièces vont s'élever en rencontrant des chicanes ou des dispositifs d'orientation qui permettront d'obtenir un flux de pièces correctement orientées;
- l'orifice calibré 103 placé au sommet de cette rampe et interdisant le passage aux pièces qui seraient hors gabarit ou incorrectement positionnées;
- la jupe extérieure 104 formant avec la cuvette 101 un ensemble mécanique rigide. Cette jupe est ici cylindrique, mais pourrait également être tronconique;
- la rampe hélicoïdale descendante 105 fixée sur la jupe 104 et constituant la zone tampon;
- le support et générateur de vibration 106 qui actionne l'ensemble ci-dessus.

En se référant plus particulièrement à la figure 6, on voit un couloir d'alimentation 107, qui relie le dispositif précédent à l'entrée de la machine et qui est muni de son propre système de motorisation (non représenté). Le dispositif est équipé d'un premier capteur 109 détectant une limite d'accumulation sur la zone tampon 105, d'un deuxième capteur 108 détectant une limite d'accumulation sur le couloir 107, et d'un troisième capteur 110 similaire au premier 109, mais placé un peu plus en aval.

Sur le plan du fonctionnement, la première règle à respecter est que le débit naturel de tous les éléments du trajet parcouru par les pièces soit sensiblement supérieur à la consommation de la machine, afin que celle-ci ne soit pas retardée par son alimentation. Cette règle étant supposée respectée, il est clair qu'en l'absence d'aléa, la tendance naturelle de la zone tampon sera de se remplir. Pour éviter de maintenir inutilement la vibration de façon permanente, celle-ci peut être interrompue quand l'accumulation des pièces atteint le premier capteur 109. Le contenu de la zone tampon s'immobilise alors, et le couloir 107 cesse d'être alimenté. Etant lui-même toujours en action, il continue à alimenter la machine en se vidant partiellement jusqu'à ce que le vide soit détecté par le deuxième capteur 108. La vibration du bol est alors remise en marche, et l'alimentation du couloir est rétablie. Pour éviter toute rupture dans le fonctionnement de la machine, le positionnement du capteur 108 doit être tel qu'il permette à la première pièce se présentant alors à l'entrée du couloir 107 de parcourir la longueur totale de ce couloir en un temps inférieur à celui de la consommation des pièces contenues entre le capteur 108 et l'entrée de la machine. Bien entendu, une vitesse linéaire importante sur le couloir 107 est un élément favorable. Une fois le bol remis en marche, le contenu de la zone tampon va tendre, dans un premier temps, à se déplacer vers l'aval, en rétablissant l'accumulation dans le couloir 107, et en créant un vide à l'aval du capteur 109. En effet, il est logique que le débit de la zone tampon 105 soit supérieur, comme on l'a vu, à celui de la machine, mais aussi à celui de la rampe intérieure 102 du bol. La zone tampon ne comporte en effet aucun obstacle à la progression des pièces; de plus, elle est aidée par la pesanteur; enfin, étant à la périphérie du système, c'est elle qui bénéficie de la plus forte amplitude de vibration. On va donc très rapidement voir la limite d'accumulation se déplacer vers l'aval par rapport au premier capteur 109, ceci jusqu'à ce que le vide précédemment crée dans le couloir 107 soit comblé. La limite d'accumulation dans la zone tampon remonte alors progressivement jusqu'au capteur 109, déclenchant un nouvel arrêt du bol.

En variante, on peut imaginer que le bol ne soit pas mis à l'arrêt complet, mais à un fonctionnement ralenti, par exemple en diminuant la fréquence ou l'amplitude de la vibration, jusqu'à ce que le débit de la rampe hélicoïdale 102 devienne inférieur à celui de la machine. Si le débit de la zone tampon 105 reste, lui, supérieur à celui de la machine, il y aura création d'un vide sur cette zone tampon, en aval du capteur 109, mais le couloir 107 restera plein. Le retour à la grande vitesse de vibration devra alors être commandé par un troisième capteur 110 judicieusement placé sur la rampe 105 pour qu'il n'y ait pas d'interruption dans le fonctionnement de la machine. Si, au contraire, le débit de la zone tampon devient également inférieur à celui de la machine, il y a création de vides à la fois sur la zone tampon et sur le couloir 107. On peut donc alors commander le retour à la grande vitesse indifféremment par le capteur 108 ou par le capteur 110. On remplace ainsi une régulation "tout ou rien" par une régulation "tout ou peu", ce qui peut être bénéfique en conduisant à un fonctionnement plus fluide.

Examinons maintenant le fonctionnement du système en situation d'aléa, c'est à dire de coincement ayant son origine au niveau de la rampe ascendante 102 ou de l'orifice calibré 103. La vibration étant maintenue, l'alimentation de la machine sera assurée jusqu'à ce qu'on ait complètement vidé la zone tampon 105 et le couloir 107. Pendant cette phase, les pièces restent en état d'accumulation. Si on désigne par "to" l'instant d'apparition de l'aléa, le temps "$\Delta t1$" pendant lequel la machine pourra continuer à fonctionner sera donné par:

$$\Delta t1 = Q \ U$$

Q étant la quantité de pièces contenues dans le dispositif, à l'instant to, entre le point de coincement et l'entrée de la machine, et U étant le débit de la machine.

Si on désigne par "$\Delta t2$" le temps mis pour éliminer l'aléa, les pièces vont se remettre à circuler à l'instant to + $\Delta t2$. A partir de cet instant, il faudra encore un temps $\Delta t3$ avant que la machine soit réalimentée, ce temps étant donné par:

$$\Delta t3 = D \ V$$

D étant la distance à parcourir entre le point de coincement et l'entrée de la machine, et V la vitesse moyenne de progression des pièces sur cette distance.

Au global, la durée $\Delta tp$ d'interruption de la machine sera égale à:

$$\Delta tp = \Delta t2 + \Delta t3 - \Delta t1$$

Ce qui montre que la continuité de fonctionnement est assurée si on a:

$\Delta t2 \leq t1 - \Delta t3$

La couverture des aléas sera donc d'autant meilleure que $\Delta t1 = Q\,U$ sera plus grand, et que $\Delta t3 = D\,V$ sera plus petit. U étant imposé, on voit qu'on a intérêt à maximiser Q, ce qui s'obtient:

- en installant une capacité de stockage tampon importante, ce qui confirme l'intérêt de la zone tampon,
- en gérant le contenu de la zone tampon de telle sorte qu'elle travaille toujours au voisinage de son remplissage maximum, en ne mettant pas trop loin en aval les capteurs 108 et 110, même si celà doit occasionner un certain "pompage" de la régulation.
- à maximiser V, notamment au niveau de la zone tampon. Nous avons vu plus haut que la configuration de celle-ci allait bien dans ce sens.

Concernant la distance D, il est clair qu'elle est à peu près proportionnelle à Q. Si on maximise Q, on maximisera donc également D, ce qui fait perdre une partie du bénéfice recherché, mais il ne peut en être autrement dans un stockage-tampon de type linéaire.

## Revendications

1. Dispositif d'alimentation en pièces (51) d'une machine comprenant un bol (1, 21, 101) ayant une paroi de révolution à axe vertical en forme de cuvette, une rampe hélicoïdale (5,8; 25,28; 102) ascendante s'étendant le long de la face interne de la paroi entre le fond et le bord supérieur du bol, et des dispositifs (55) de tri et d'orientation des pièces (51) échelonnés le long de la rampe, dans lequel dispositif le bol (1, 21, 101) est animé d'un mouvement vibratoire autour de son axe vertical pour faire cheminer les pièces (51) contenues dans le bol, l'une après l'autre le long de la rampe (5,8; 25,28; 102) vers un orifice supérieur (6, 26, 103) de sortie du bol, caractérisé en ce que en aval dudit bol (1, 21, 101), vu dans le sens de cheminement des pièces (51), est disposée une rampe hélicoïdale (8; 28; 105) aval équipée de dispositifs de tri et d'orientation des pièces, ladite rampe aval (8, 28, 105) ayant un axe vertical confondu ou adjacent à celui dudit bol (1, 21, 101) animé d'un mouvement vibratoire.

2. Dispositif selon la revendication 1, caractérisé en ce qu'il comporte deux bols (1,2; 21,22) travaillant en série, chacun équipé d'une rampe hélicoïdale (5,,8; 25,28) ascendante interne et disposés l'un au-dessus de l'autre sur un même axe actionné par un générateur de vibrations (24).

3. Dispositif selon la revendication 1, caractérisé en ce que ledit bol (101) comporte une jupe cylindrique (104) ou tronconique concentrique à la cuvette (101), rigidement solidaire de celle-ci, et équipée d'une rampe hélicoïdale descendante (105) se présentant sur le trajet des pièces (51) dans le prolongement de la rampe ascendante (102), et constituant une zone-tampon dont la capacité permet de limiter la répercussion des aléas inhérents à la sélection et à l'orientation des pièces, sur le fonctionnement de la machine desservie.

4. Dispositif selon la revendication 1, 2 ou 3, caractérisé en ce que la rampe hélicoïdale (105) en aval comporte des dispositifs de tri additionnel de façon que le débit de cette rampe aval est inférieur à celui de l'autre rampe (102).

5. Dispositif selon la revendication 1, 2 ou 3, caractérisé en ce qu'un volet de dérivation (35) est placé à la sortie du bol amont (1, 21, 101) et/ou aval (2, 22) pour faire retomber les pièces (51) dans le bol et éviter une accumulation excessive de pièces en aval du bol concerné.

6. Dispositif selon l'une quelconque des revendications précédentes, caractérisé en ce qu'il comporte un détecteur (13, 14; 23, 24; 108, 109, 110) d'accumulation de pièces pour commander une réduction ou un arrêt du débit des pièces (51) par actionnement d'un volet de dérivation (35) et/ou par réduction ou arrêt du mouvement vibratoire.

7. Dispositif selon la revendication 3 et 6, caractérisé en ce qu'il comporte un premier capteur de détection d'accumulation (109) placé sur la rampe descendante (105), légèrement en aval de son point de jonction avec la rampe ascendante (102), ce point de jonction étant matérialisé par un orifice calibré (103) interdisant le passage des pièces hors gabarit ou mal orientées, et que ledit premier capteur (109), ayant détecté une accumulation, interrompt ou réduit la vibration du bol (101), cette vibration étant remise en marche normale par un second capteur (108) placé sur le couloir d'alimentation faisant la liaison entre le bol et la machine au moment où ce second capteur constate l'apparition d'un vide.

8. Dispositif selon l'une quelconque des revendications précédentes, caractérisé en ce qu'il comporte un système de contrôle (60) des pièces permettant de détecter des défauts non décelables par le reste du dispositif, ce système étant placé en sortie de la cuvette amont (1, 21) et pilotant un volet orientable (62) permettant d'envoyer les pièces défectueuses au rebut au lieu de les envoyer dans la cuvette aval.

# FIG. 1

# FIG. 2

## FIG. 3a

## FIG. 3b

# FIG. 4

FIG. 5

FIG. 6

**Office européen des brevets**

# RAPPORT DE RECHERCHE EUROPEENNE

Numéro de la demande

## EP 90 42 0569

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 125 208 (SECUNDA)<br>* le document en entier *<br>– – – | 1,3 | B 65 G<br>27/34<br>B 65 G 27/02 |
| X | US-A-2 654 465 (SGRICCIA)<br>* le document en entier *<br>– – – | 1,3 | B 65 G 47/51<br>B 65 G 47/14 |
| A | US-A-3 447 660 (WINANS)<br>* colonne 5, ligne 10 - colonne 6, ligne 11; figures 1-3 *<br>– – – | 1,3,4 | |
| A | PATENT ABSTRACTS OF JAPAN vol. 8, no. 158 (M-311)(1595) 21 juillet 1984,<br>& JP-A-59 053313 (SHINKO DENKI) 28 mars 1984,<br>* le document en entier *<br>– – – | 1,6 | |
| A | DE-A-2 239 501 (FELDPAUSCH & CO.)<br>* revendication 1; figure 1 *<br>– – – | 1,6 | |
| A | AT-B-3 414 26 (W. STICHT)<br>* revendications 1, 4; figure 1 *<br>– – – | 1,8 | |
| A | PATENT ABSTRACTS OF JAPAN vol. 9, no. 238 (M-416)(1961) 25 septembre 1985,<br>& JP-A-60 093021 (SHINKO DENKI) 24 mai 1985,<br>* le document en entier *<br>– – – – – | 1,2 | **DOMAINES TECHNIQUES RECHERCHES (Int. Cl.5)**<br><br>B 23 Q<br>B 65 G |

Le présent rapport de recherche a été établi pour toutes les revendications

| Lieu de la recherche | Date d'achèvement de la recherche | Examinateur |
|---|---|---|
| Berlin | 16 avril 91 | SIMON J J P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

 

& : membre de la même famille, document correspondant